(19) Europäisches Patentamt
European Patent Office
Office européen des brevets

(11) **EP 4 341 014 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **22727006.3**

(22) Anmeldetag: **28.04.2022**

(51) Internationale Patentklassifikation (IPC):
**B21B 31/07** (2006.01) **F16C 17/10** (2006.01)
**F16C 33/10** (2006.01)

(52) Gemeinsame Patentklassifikation (CPC):
**F16C 17/105; B21B 31/074; D21F 11/04;**
**F16C 13/022; F16C 33/1045; F16C 35/02;**
D21G 1/0226; F16C 2240/56; F16C 2322/12

(86) Internationale Anmeldenummer:
**PCT/EP2022/061370**

(87) Internationale Veröffentlichungsnummer:
**WO 2022/243004 (24.11.2022 Gazette 2022/47)**

(54) **ZAPFENBUCHSE ALS TEIL EINES ÖLFILMLAGERS**

JOURNAL BUSH AS PART OF AN OIL FILM BEARING

BAGUE DE PALIER FAISANT PARTIE D'UN PALIER À FILM D'HUILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2021 DE 102021205276**

(43) Veröffentlichungstag der Anmeldung:
**27.03.2024 Patentblatt 2024/13**

(73) Patentinhaber: **SMS group GmbH**
**41069 Mönchengladbach (DE)**

(72) Erfinder:
• **ALKEN, Johannes**
**57076 Siegen (DE)**
• **KNIE, Daniel**
**57258 Freudenberg (DE)**
• **TUCAK, Andrej**
**57482 Wenden-Brün (DE)**

(74) Vertreter: **Kross, Ulrich**
**Hemmerich & Kollegen**
**Patentanwälte**
**Hammerstraße 2**
**57072 Siegen (DE)**

(56) Entgegenhaltungen:
**EP-B1- 1 213 061     WO-A1-2010/109310**
**DE-A1- 3 150 496     DE-C- 832 968**

**Beschreibung**

Die Erfindung betrifft eine Zapfenbuchse als Teil eines Ölfilmlagers in einem Walzgerüst, wobei die Zapfenbuchse dazu dient, den konischen Walzenzapfen einer Walze, insbesondere einer Stützwalze des Walzgerüstes, aufzunehmen. Das Ölfilmlager mit der Zapfenbuchse dient zum Lagern der Walze in dem Walzgerüst. Das Walzgerüst dient typischerweise zum Kalt- oder Warmwalzen von metallischem Walzgut in einem Walzwerk.

Im Stand der Technik sind Zapfenbuchsen von Ölfilmlagern grundsätzlich bekannt.

Die Offenlegungsschrift DE 2843658 A1 beschreibt die Konstruktion einer konischen Zapfenbuchse als dahingehend vorteilhaft, dass das Lager leichter bei Wartungsarbeiten vom ebenfalls konischen Walzenzapfen auf- bzw. abgezogen werden kann. Dieser relativ enge Festsitz der konischen Zapfenbuchse auf dem konischen Walzenzapfen ist nicht so stramm aufgezogen, dass keine begrenzte Relativdrehung der Zapfenbuchse zum Walzenzapfen stattfinden kann. Diese kleinsten Relativdrehungen (in DE 2843658 auch als "Micreep" bezeichnet) können zu mikroskopisch kleinem Verschleiß ("Fretting") an den Kontaktflächen führen. Eine bleibende Schädigung an den rotierenden Bauteilen, insbesondere an der Oberfläche eines Walzenzapfens kann die Folge sein.

Die Erfindung gemäß der DE 2843658 A1 hat es sich zur Aufgabe gemacht, eine verbesserte Vorrichtung zur Schmierung des Übergangs zwischen Walzenzapfen und der mitrotierenden Zapfenbuchse zu schaffen, ohne dass dafür nachteiligerweise allzu viel Öl für die Funktion des Ölfilmlagers aus der Belastungszone abgezogen wird. Dies gelingt durch zusätzliche auf der Innenseite der rotierenden Zapfenbuchse angeordnete Sekundärschmiernuten, die mit Öl aus den Primärschmiernuten gespeist werden. Mehrere so über dem Umfang verteilte, voneinander getrennte Nutennetze fördern die Schmierung der Kontaktflächen zwischen Walzenzapfen und Zapfenbuchse.

In der Offenlegungschrift (WO 2011/096672) wird eine weitere Methode/Vorrichtung der Anordnung von Schmiernuten in einem Ölfilmlager für Walzwerkwalzen vorgestellt.

In EP 1213061 B1 wird eine dünnwandige Zapfenbuchse vorgestellt, die aufgrund ihrer gegenüber dem damaligen Stand der Technik stärkeren elastischen Verformung bei Belastung eine erhöhte Tragkraft zum Ziel hat. Es wird für den Konus ein Mindestverjüngungswinkel von 3 Grad angegeben, unterhalb dessen eine "Selbstsicherung" stattfindet und es wird eine minimale (dünnste) Dicke der Zapfenbuchse von 10mm bis 0,024 D + 14,5 (D=Laufdurchmesser des Lagers) angegeben, der auf einen außen verjüngten Abschnitt des Walzenzapfens aufgesetzt ist.

Die in diesem Patent angesprochene Tragkraftsteigerung (der Fachmann spricht von EHD; Elasto-Hydro-Dynamischer Tragkraftsteigerung) entsteht dadurch, dass sich bei radialer Belastung (Öldruck in der Lastzone) die Zapfenbuchse axial vom Walzenballen weg verschieben kann. Diese Verschiebung wird durch eine Befestigungseinheit an dem verjüngten Ende des Walzenzapfens, wie sie beispielsweise in den Offenlegungschriften (DE102016214011A1, DE102017217562A1) beschrieben sind, begrenzt. Außerdem zeigen simulatorische Untersuchungen, dass dieses axiale Abgleiten der Zapfenbuchse (Ursache ist die Hangabtriebskraft auf dem Konusverjüngungswinkel) am Umfang nicht gleichmäßig stattfindet, sondern maximiert beim rotatorischen Durchlaufen der Lastzone auftritt. Durch dieses am Umfang variierende Abgleiten der Zapfenbuchse entsteht ein sinusförmiges hin und her gleiten der beiden Reibpaare, welches dafür sorgt, dass Öl über die Ölschmiernuten (oben beschrieben) auch an die Kontaktflächen zwischen Walzenzapfen und Zapfenbuchse gelangen kann, wo keine Schmiernuten angeordnet sind (also zwischen den Schmiernuten).

Durch das Abgleiten der Zapfenbuchse treten Axialkräfte in der Befestigungseinheit auf, die sich an dem Walzenzapfenende abstützen bzw. von diesem gehalten werden müssen. Die Höhe dieser Axialkräfte (Hangabtriebskräfte) steht in direktem Verhältnis zum Konusverjüngungswinkel. In der Praxis hat sich gezeigt, dass es bauartbedingt bei zu großen Winkeln zu Beschädigungen am Walzenende (dort wo die axiale Kraft von der Walze aufgenommen wird) kommen kann. Daraus ergibt sich ein konträres Konstruktionsziel:

- Die Zapfenbuchse muss axial weit abgleiten, damit das über Schmiernuten zugefügte Schmiermedium (Öl) ausreichend an die Flächen, die zwischen den Schmiernuten liegen, gelangen kann; und

- Die Zapfenbuchse darf nicht zu große Kräfte auf die axiale Befestigungseinheit ausüben, damit diese nicht beschädigt wird.

Die deutsche Patentanmeldung DE 31 50 496 A1 offenbart eine Zapfenbuchse zur Verwendung als Teil eines Ölfilmlagers gemäß dem Oberbegriff des Patentanspruchs 1.

Der Erfindung liegt die Aufgabe zugrunde, eine bekannte Zapfenbuchse als Teil eines Ölfilmlagers sowie ein bekanntes Walzgerüst mit der Zapfenbuchse dahingehend weiterzubilden, dass sie den beiden zuvor genannten konträren Konstruktionszielen gerecht werden.

Diese Aufgabe wird für die Zapfenbuchse durch den Gegenstand des Anspruchs 1 gelöst. Diese Lösung ist dadurch gekennzeichnet, dass für die Zapfenbuchse gilt:

$$0,35 < \frac{3,6}{a}(D - B) + kD < 0,5 \qquad (1)$$

mit

a [m]      Konuslänge der Zapfenbuchse,
D [m]     äußerer Laufdurchmesser der Zapfenbuchse,
B [m]     großer Konusdurchmesser der Zapfenbuchse; und
           k = 0,15 [1/m]Gleitkoeffizient.

Vorzugsweise beträgt der Wert für die Untergrenze 0,37 und/oder der Wert für die Obergrenze 0,49.

Es ist das Verdienst der Erfinder, herausgefunden zu haben, dass Zapfenbuchsen, welche die neuerlich beanspruchte konstruktive Bedingung gemäß Formel (1) erfüllen, auch die Aufgabe der Erfindung lösen. D. h., bei derartigen Zapfenbuchsen gelangt im Walzbetrieb bei Einwirkung großer Walzkräfte aufgrund einer winkelpositionsabhängigen axialen Zapfenbuchsenverschiebung bzw. -verformung einerseits genügend Schmieröl in den Bereich zwischen Walzenzapfen und Zapfenbuchse, so dass dort keinerlei Beschädigungen an der Oberfläche des Walzenzapfens auftreten. Weiterhin sind bei den gemäß Formel 1 konstruierten Zapfenbuchsen die bei der elastischen axialen Zapfenbuchsenverschiebung bzw. -verformung aufgrund von Walzkräften üblicher Größe entstehenden Axialkräfte vorteilhafterweise tolerabel, d. h. sie liegen in einem zulässigen Kräftebereich. Die Axialkräfte aus diesem Kräftebereich können von einer Befestigungseinrichtung mit einem zugeordneten Federring aufgefangen werden. Anders ausgedrückt: Bei den erfindungsgemäß konstruierten Zapfenbuchsen sind die im Falle einer Zapfenbuchsenverschiebung bzw. -verformung auftretenden axialen Kräfte so gering, dass nicht die Gefahr besteht, dass das Ende des Walzenzapfens von dem übrigen Walzenzapfen abreißt, weil die von dem Befestigungssystem in ihn eingeleiteten (axialen) Kräfte zu groß sind, oder dass die Befestigungssysteme selber überlastet bzw. beschädigt werden würden. Die Federrate des Federrings muss so ausgelegt werden, dass bei Maximalbeanspruchung des Lagers die dann auftretende Hangabtriebskraft (berechnet mit bekanntem Konuswinkel) zu einer axialen Mindestverschiebung der Zapfenbuchse von 1/10mm vorzugsweise von 3/10mm führt.

Gemäß einem Ausführungsbeispiel weisen die konische Zapfenbuchse an ihrer Innenseite, wie auch der konische Walzenzapfen an seiner Außenseite jeweils mindestens eine Nut auf zum teilweisen Aufnehmen einer Passfeder. Die Passfeder greift in beide Nuten ein und bildet dadurch eine rotatorische Kopplung in Umfangsrichtung zwischen dem Walzenzapfen und der auf diesem aufgezogenen und mitdrehenden Zapfenbuchse. Erfindungsgemäß ist zumindest eine dieser beiden Nuten jeden Nutenpaares so bemessen, dass die Passfeder mit einem axialen Spiel und/oder mit einem radialen Spiel in den Nuten sitzt. Die beiden Spiele erleichtern bzw. ermöglichen erst die besagte axiale Verschiebung bzw. Verformung der Zapfenbuchse, wenn sie während des Walzbetriebs den Bereich mit der höchsten Belastung durchläuft.

Die oben genannte Aufgabe der Erfindung wird weiterhin durch ein Walzgerüst gemäß Patentanspruch 5 gelöst. Die Vorteile dieser Lösung entsprechen den oben mit Bezug auf die beanspruchte Zapfenbuchse genannten Vorteilen.

Weitere vorteilhafte Ausgestaltungen der Zapfenbuchse und des Walzgerüstes sind Gegenstand der abhängigen Ansprüche.

Der Beschreibung sind 5 Figuren beigefügt, wobei

Figur 1 einen Längsschnitt durch die erfindungsgemäße Zapfenbuchse;

Figur 2 den Zulässigkeitsbereich für die erfindungsgemäße Dimensionierung der Zapfenbuchse;

Figur 3 die erfindungsgemäße Zapfenbuchse ohne Belastung durch eine Walzkraft in Verbindung mit einer Passfeder im Längsschnitt;

Figur 4 eine typische Druckverteilung auf der Zapfenbuchsenoberfläche in einem Ölfilmlager bei Belastung durch eine Walzkraft; und

Figur 5 einen Längsschnitt durch die erfindungsgemäße Zapfenbuchse und den darin gelagerten Walzenzapfen unter Belastung durch die Walzkraft;

zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

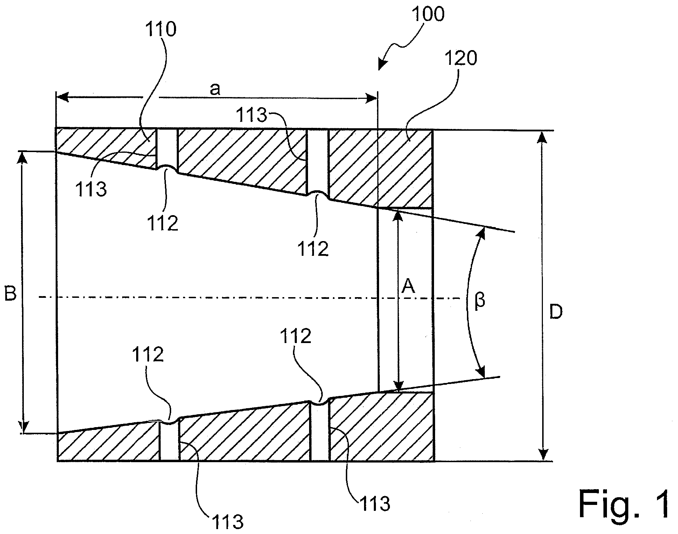

Figur 1 zeigt die erfindungsmäße Zapfenbuchse 100 in einem Längsschnitt. Sie hat einen zylindrischen Außenumfang und bildet zusammen mit einer Lagerbuchse, in deren zylindrischem Hohlraum sie aufgenommen wird, ein Ölfilmlager; in Figur 1 nicht gezeigt. Zwischen der Lagerbuchse und der Zapfenbuchse befindet sich der mit Schmiermittel befüllte Schmiermittelspalt des Ölfilmlagers.

Die erfindungsmäße Zapfenbuchse besteht aus einem konischen Längsabschnitt 110, dessen auf den zylindrischen Außenumfang der Zapfenbuchse projizierte Länge mit dem Bezugszeichen a bezeichnet ist. Der konische Längsabschnitt 110 spannt einen konischen Hohlraum auf mit einem großen Konusdurchmesser B und einem kleinen Konusdurchmesser A. Der konische Längsabschnitt 110 hat einen Konuswinkel $\beta$. Im Bereich des kleinen Konusdurchmessers A schließt sich an den konischen Längsabschnitt 110 ein zylindrischer Endabschnitt 120 der Zapfenbuchse nahtlos an. Der Endabschnitt 120 spannt einen zylinderförmigen Hohlraum auf, dessen Durchmesser dem Durchmesser des kleinen Konusdurchmesser A entspricht.

Sowohl der von dem konischen Längsabschnitt 110 aufgespannte konische Hohlraum wie auch der sich daran anschließende und von dem Endabschnitt 120 aufgespannte zylindrische Hohlraum dienen zur Aufnahme eines entsprechenden komplementär ausgebildeten Zapfens einer Walze in einem Walzgerüst. Der Außendurchmesser der außen zylindrischen Zapfenbuchse beträgt D. Die zylinderförmige Außenseite der Zapfenbuchse ist über Verbindungskanäle 113 mit Schmiernuten 112 an der Innenseite der Zapfenbuchse verbunden.

Beim Betrieb der so gelagerten Walze ist zwischen der Lagerbuchse und der Außenseite der Zapfenbuchse 100 der besagte Schmierfilm aus einem Schmiermittel gebildet. Über die Verbindungskanäle 113 gelangt das Schmiermittel in die Schmiernuten 112. Solange die Zapfenbuchse 100 jedoch festsitzend auf dem Walzenzapfen aufgezogen ist, verbleibt das Schmiermittel in den Schmiernuten 112 und kann sich von dort aus nicht in die Kontaktfläche zwischen Zapfenbuchse und Walzenzapfen ausbreiten.

Erfindungsgemäß gilt für die Zapfenbuchse 100:

$$0,35 < 3,6/a \ (D-B) + k * D < 0,5 \qquad (1)$$

mit

B [m] großer Konusdurchmesser
D [m] äußerer Laufdurchmesser
a [m] auf den zylindrischen Außenumfang der Zapfenbuchse projizierte Länge des konischen Längsabschnittes
k=0,15 [1/m] Gleitkoeffizient.

Vorzugsweise beträgt die Untergrenze 0,37 (anstatt 0,35) und/oder die Obergrenze 0,49 (anstatt 0,5).

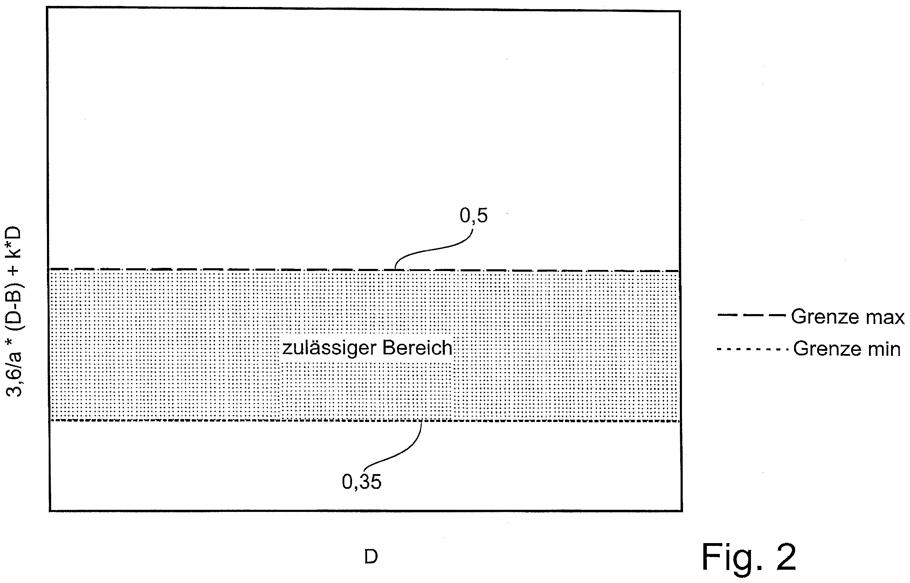

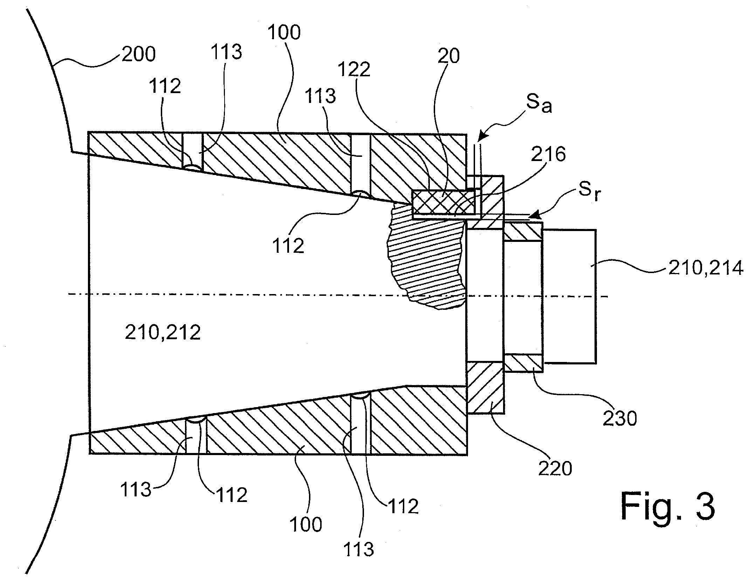

Die beanspruchten Unter- und Obergrenzen sind anschaulich in Figur 2 dargestellt. Sie spannen einen konstruktiv zulässigen Bereich auf. D. h. solange eine Zapfenbuchse die beanspruchte Formel (1) mit der beanspruchten Ober- und Untergrenze, vorzugsweise mit der vergrößerten Untergrenze und/oder mit der verringerten Obergrenze erfüllt, erfüllt die Zapfenbuchse die der Erfindung zugrundeliegende Aufgabe, d. h. das zu lösende konträre Konstruktionsziel. Dieses konträre Konstruktionsziel und dessen erfindungsgemäße Lösung werden nachfolgend nochmals anhand der Figur 3 bis 5 näher erläutert.

Figur 3 zeigt eine Ergänzung zu Figur 1. Auch in Figur 3 ist die Zapfenbuchse 100 festsitzend auf dem Walzenzapfen 210 aufgezogen. D. h., der konische Längsabschnitt 110 der Zapfenbuchse 100 sitzt spaltfrei auf dem im Wesentlichen komplementär ausgebildeten konischen Walzenzapfenabschnitt 212 und der zylindrische Endabschnitt 120 der Zapfenbuchse sitzt auf dem zylindrischen Walzenzapfenendabschnitt 214 des Walzenzapfens. Zwischen der Zapfenbuchse 100 und dem Walzenzapfen 210 besteht grundsätzlicher Reibschluss, d. h. die Zapfenbuchse 100 rotiert aufgrund der bestehenden Haftreibung mit dem Walzenzapfen 210 mit. Gesichert wird die rotatorische, reibschlüssige Kopplung durch mindestens eine Passfeder 20, die jeweils zu einem Teil in einer axial ausgerichteten Nut 122 an der Innenseite der Zapfenbuchse und zu einem anderen Teil in einer in axialer Richtung verlaufenden Nut 216 an der Außenseite des Walzenzapfens sitzt. Die Passfeder 20 sitzt in diesen beiden Nuten 122, 216 mit axialem Spiel Sa und/oder mit radialem Spiel Sr.

In axialer Richtung wird die Zapfenbuchse 100 auf dem Walzenzapfen gesichert zum einen durch einen Federring 220 sowie durch einen Befestigungsring 230.

Figur 3 zeigt die Konstellation von Zapfenbuchse und Walzenzapfen in unbelastetem Zustand, d. h. ohne Einwirkung einer Walzkraft oder bei Einwirkung einer Walzkraft, die jedoch so gering ist, dass sie nicht zu einer Deformation der Zapfenbuchse führt. In diesem Zustand ist kein Schmierfilm zwischen der Zapfenbuchse und dem Walzenzapfen ausgebildet.

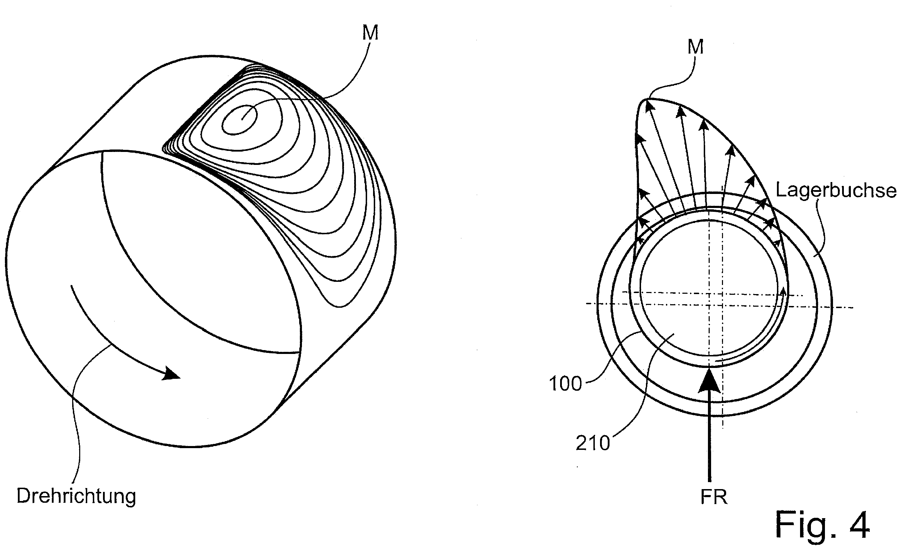

Figur 4 zeigt die reale Druckverteilung, wie sie im Lagerspalt zwischen rotierender Zapfenbuchse und stehender Lagerbuchse während eines Walzbetriebs auftritt. Beispielhaft ist die Druckverteilung hier gezeigt für den Fall, dass ein oberer Stützwalzenzapfen 210 mit aufgezogener Zapfenbuchse 100 in einem Walzgerüst drehgelagert ist und sich während des Walzbetriebs in Pfeilrichtung dreht; siehe linke und rechte Abbildung in Fig. 4. Wichtig ist zu erkennen, dass die Druckbelastung für das Lager und insbesondere die Zapfenbuchse über den Umfang keineswegs gleich verteilt ist, sondern dass sich im Bereich der der Walzkrafteinwirkung FR gegenüberliegenden Oberfläche der Zapfenbuchse ein Belastungsmaximum M ausbildet.

Die in Figur 4 gezeigte Druckverteilung ist während des Walzbetriebs im Wesentlichen in einem Umfangswinkelbereich ortsfest, zumindest solange sich die Richtung, in welcher die Walzkraft FR wirkt, nicht verändert. Dem steht nicht entgegen, dass die Walzkraft grundsätzlich ihren Betrag ändern kann.

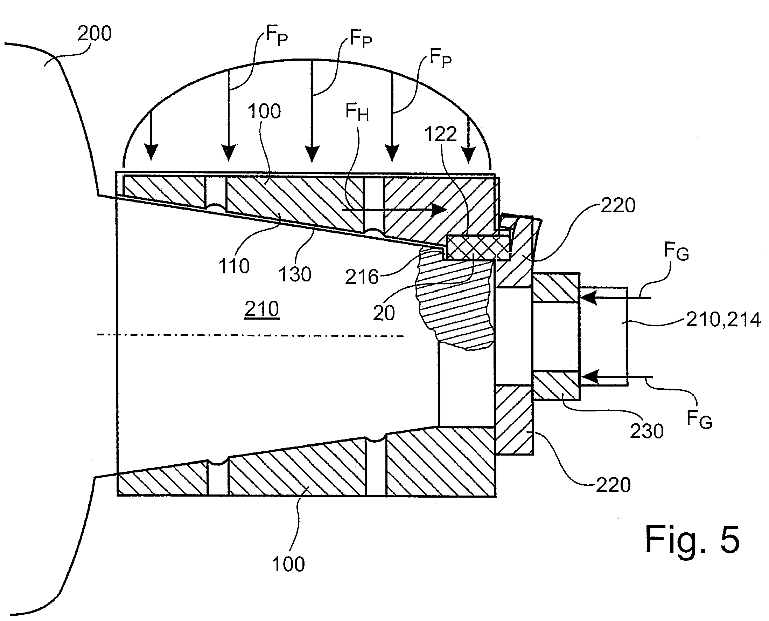

Die besagte ortsfeste Druckverteilung hat zur Folge, dass ein Punkt auf der Oberfläche des Walzenzapfens bzw. der mitrotierenden Zapfenbuchse nur dann der gezeigten großen Druckbelastung ausgesetzt ist, wenn er während seiner Rotation den in Figur 4 gezeigten Druckbereich mit der großen maximalen Druckbelastung M durchläuft. In dieser Situation, d. h. beim Durchlaufen des Winkelbereiches mit der großen Druckbelastung, kann die aus der Walzkraft FR resultierende Druckkraft FP auf die Zapfenbuchse in radialer Richtung und insbesondere die in Verbindung mit dem konischen Längsabschnitt 110 daraus resultierende Hangabtriebskraft FH so groß werden, dass sich die Zapfenbuchse 100, wie in Figur 5 gezeigt, lokal verschiebt bzw. verformt. Die lokale Verformung besteht darin, dass sich insbesondere der Teil der Zapfenbuchse, der jeweils aktuell bei der Rotation den Bereich der großen Druckbelastung M durchläuft, auf dem Walzenzapfen in Richtung der Hangabtriebskraft FH verschiebt bzw. verformt und sich dadurch lokal von dem Walzenzapfen ablöst.

Das Ablösen der Zapfenbuchse von dem Walzenzapfen 210 erfolgt unter Ausbildung eines mikroskopisch engen und lokal begrenzten Schmiermittelspaltes 130 zwischen der Zapfenbuchse 100 und dem Walzenzapfen 210. Dieser mikroskopisch enge Schmiermittelspalt 130 erstreckt sich ebenfalls keineswegs über den gesamten Umfang, sondern ist im Wesentlichen in Umfangsrichtung auf den in Figur 4 dargestellten Bereich der großen Druckbelastung beschränkt. Beim Durchlaufen des Winkelbereichs der großen Druckbelastung M wird somit Schmieröl aus dem eigentlichen Schmierfilm zwischen einer Lagerbuchse und der Zapfenbuchse 100, wie in Figur 4 gezeigt, über die Verbindungskanäle 113 in die Schmiernuten 112 und von dort aus in den besagten Schmiermittelspalt 130 gepresst, wie in Figur 5 gezeigt. Der den Winkelbereich großer Druckbelastung durchlaufende Teil der Zapfenbuchse 100 verformt sich aufgrund der Druckkraft FP, wie ebenfalls in Figur 5 gezeigt, in der Weise, dass er auf dem Schmiermittelfilm 130 abgleitend gegen den Federring 220 drückt und diesen ebenfalls verformt. Bei der Verformung/Verschiebung wird das axiale und radiale Spiel Sa, Sr der Passfeder 20 in der Nut 122 in der Zapfenbuchse und/oder in der Nut 216 in dem Walzenzapfen ausgenutzt, indem die Passfeder aufgrund der Verschiebung des Walzenzapfens gemäß Figur 5 in ihre Begrenzung gedrückt wird.

Beachtlich ist, dass sich die Zapfenbuchse auf der gegenüberliegenden Seite, in Figur 5 unten, nur geringförmig verformt und damit nahezu unverändert mit Presssitz ohne Schmiermittelspalt auf dem Walzenzapfen sitzt.

Durch die erfindungsgemäße Auslegung der Zapfenbuchse 100 gemäß der Formel (1) wird sichergestellt, dass sich zum einen der besagte Schmiermittelspalt 130 ausbildet, der gewährleistet, dass das Schmieröl zwischen der Zapfenbuchse und dem Walzenzapfen nicht auf den Bereich der Schmiernuten 112 lokal beschränkt bleibt, sondern sich auch in die Bereiche zwischen den Schmiernuten 112 verteilt. Das ist gewünscht, trotz des immer noch bestehenden grundsätzlichen festen Sitzes der Zapfenbuchse auf dem Walzenzapfen, um das aus dem Stand der Technik bekannte Fretting, d. h. den mikroskopisch kleinen Verschleiß, der ansonsten im Bereich der Kontaktflächen zwischen Zapfenbuchse und Walzenzapfen beim Durchlaufen des Winkelbereichs mit der großen Druckbelastung entstehen würde, zu verhindern. Dieser Verschleiß wird durch den Schmiermittelspalt 130 verhindert, der seinerseits dadurch realisiert bzw. begünstigt wird, dass die Hangabtriebskraft FH möglichst groß wird. Die Hangabtriebskraft wird insbesondere umso größer, je größer der Unterschied zwischen dem großen und dem kleinen Konusdurchmesser B, A ist. Andererseits darf die Hangabtriebskraft FH jedoch auch nicht zu groß werden, weil ansonsten der Federring 220 und der Befestigungsring 230 die Hangabtriebskraft FH nicht mehr aufnehmen und in den Walzenzapfen 210 ableiten können. Im schlimmsten Fall, d. h. wenn die Hangabtriebskraft FH zu groß werden würde, kann es passieren, dass der zylindrische Walzenzapfenendabschnitt 214 von dem konischen Walzenzapfenabschnitt 212 in axialer Richtung abgesprengt werden würde.

Wie gesagt, die konstruktive Auslegung der Zapfenbuchse 100 gemäß der Formel (1) stellt sicher, dass beide konträren Konstruktionsziele realisiert bzw. eingehalten werden können.

Die in Figur 5 gezeigten beiden Pfeile, die von rechts gegen den Befestigungsring 230 zeigen, repräsentieren die Gegenkraft FG zur Hangabtriebskraft FH, die von dem Walzenzapfen, insbesondere von dem zylindrischen Walzenzapfenendabschnitt 214 aufgenommen werden muss, wenn die Hangabtriebskraft über den Befestigungsring 230 in den Walzenzapfen 210 abgeleitet wird.

Bezugszeichenliste

| | |
|---|---|
| 100 | Zapfenbuchse |
| 110 | konischer Längsabschnitt |
| 112 | Schmiernut |
| 113 | Verbindungskanal |
| 120 | Endabschnitt |
| 122 | Nut für Passfeder |
| 130 | Schmiermittelspalt |
| 20 | Passfeder |
| 200 | Walze |
| 210 | Walzenzapfen |
| 212 | konischer Walzenzapfenabschnitt |
| 214 | zylindrischer Walzenzapfenendabschnitt |
| 216 | Nut für Passfeder |
| 220 | Federring |
| 230 | Befestigungsring |

| | |
|---|---|
| A | kleiner Konusdurchmesser |
| B | großer Konusdurchmesser |
| D | äußerer Laufdurchmesser der Zapfenbuchse |
| M | Belastungsmaximum |
| Sa | axiales Spiel |
| Sr | radiales Spiel |
| $\beta$ | Konuswinkel |
| FG | Gegenkraft zur Hangabtriebskraft FH |
| FP | Druckkraft resultierend aus der Walzkraft FR |
| FR | Walzkraft |
| FH | Hangabtriebskraft |
| a | (projizierte) Konuslänge des konischen Längsabschnitts |

**Patentansprüche**

1. Zapfenbuchse (100) zur Verwendung als Teil eines Ölfilmlagers in einem Walzgerüst zur Aufnahme eines konischen Walzenzapfens einer Walze, insbesondere einer Stützwalze; wobei die Zapfenbuchse

   - unter Einwirkung einer durch das Walzgerüst ausgeübten Walzkraft elastisch deformierbar ist;
   - an ihrer Außenseite zylindrisch geformt ist mit einem äußeren Laufdurchmesser D;
   - einen innen konischen Längsabschnitt (110) aufweist, der an seiner Innenseite über eine Konuslänge a konisch geformt ist mit einem großen Konusdurchmesser B und einem Konuswinkel $\beta$ zur Aufnahme des konischen Walzenzapfens der Walze; und
   wobei der konische Längsabschnitt (110) an seiner Innenseite Schmiernuten (112) aufweist zum Einbringen von Schmiermittel in den Zwischenraum zwischen der Innenseite der Zapfenbuchse und der Außenseite des konischen Walzenzapfens;
   **dadurch gekennzeichnet,**
   **dass** für die Zapfenbuchse (100) gilt:

$$0,35 < \frac{3,6}{a}(D - B) + kD < 0,5 \qquad (1)$$

   mit
   k = 0,15/m Gleitkoeffizient.

2. Zapfenbuchse (100) nach Anspruch 1
   **dadurch gekennzeichnet,**
   **dass** für die Zapfenbuchse (100) gilt:

$$0,37 < 3,6/a \ (D-B) + kD < 0,49 \qquad (2)$$

**3.** Zapfenbuchse (100) nach einem der vorangegangenen Ansprüche,
**gekennzeichnet durch**
einen hohl-zylindrisch geformten Endabschnitt (120), der sich - mit seinem Innendurchmesser fluchtend - am Ort des kleinsten Konusdurchmessers A des konischen Längsabschnitts an diesen anschließt.

**4.** Zapfenbuchse (100) nach einem der vorangegangenen Ansprüche,
**dadurch gekennzeichnet,**
**dass** die Zapfenbuchse (100) an ihrer Innenseite eine Nut (122) aufweist zur teilweisen Aufnahme einer Passfeder (20).

**5.** Walzgerüst aufweisend,

mindestens ein Lagergehäuse, das als Ölfilmlager ausgebildet ist mit einer innen konischen Zapfenbuchse (100) nach einem der vorangegangenen Ansprüche; und

mindestens eine Walze (200), deren Walzenzapfen (210) mit einem konischen Walzenzapfenabschnitt (212) und vorzugsweise auch einem zylindrischen Walzenzapfenendabschnitt (214) ausgebildet sind zur Aufnahme in der Zapfenbuchse (100),

wobei die Zapfenbuchse mit dem Walzenzapfen in dem Lagergehäuse, vorzugsweise in einer Lagerbuchse in dem Lagergehäuse, drehbar gelagert ist.

**6.** Walzgerüst nach Anspruch 5,
**dadurch gekennzeichnet,**
**dass** der Walzenzapfen (210) an seiner Außenseite eine Nut aufweist; dass eine Passfeder (20) vorgesehen ist, von der ein erster Teil von der Nut an der Innenseite der Zapfenbuchse (100) und ein zweiter Teil von der Nut (216) an der Außenseite der Walzenzapfen (210) aufgenommen ist; und dass zumindest eine der beiden Nuten in Bezug auf die Abmessungen der Passfeder (20) derart bemessen ist, dass die Passfeder (20) im lastfreien Zustand, insbesondere außerhalb des Walzbetriebs, mit einem axialen Spiel von Sa > 0,0 mm und mit einem radialen Spiel Sr>0,5 mm in den Nuten sitzt.

**7.** Walzgerüst nach Anspruch 6,
**dadurch gekennzeichnet,**
**dass** die Zapfenbuchse (100) mit Hilfe eines Befestigungsrings (230) und einer in axialer Richtung zwischen der Zapfenbuchse (100) und dem Befestigungsring (230) angeordneten Federring (220) auf dem Walzenzapfen gegen ein Abrutschen von dem Walzenzapfen (210) in axialer Richtung gesichert ist; und dass die Federrate des Federrings (220) derart ausgelegt ist, dass bei Maximalbeanspruchung des Lagers die dann auftretende Hangabtriebskraft berechnet mit bekanntem Konuswinkel zu einer axialen Mindestverschiebung der Zapfenbuchse von 1/10mm vorzugsweise von 3/10mm führt.


**Claims**

**1.** Journal bush (100) for use as part of an oil film bearing in a roll stand for reception of a conical roll journal of a roll, particularly a backing roll; wherein the journal bush

- is resiliently deformable under the action of a rolling force exerted by the roll stand;
- is formed at its outer side to be cylindrical with an outer running diameter D;
- has an inwardly conical length section (110) which is formed at its inner side over a cone length a to be conical with a major cone diameter B and a cone angle $\beta$ for reception of the conical roll pin of the rolls; and
wherein the conical length section (110) has at its inner side lubricant grooves (112) for introduction of lubricant into the intermediate space between the inner side of the journal bush and the outer side of the conical roll journal;
**characterised in that**
for the journal bush (100) there applies:

$$0.35 \ < \ \frac{3.6}{a}\left(D - B\right) + kD \ < 0.5 \tag{1}$$

wherein
k = 0.15/m coefficient of sliding friction.

2.  Journal bush (100) according to claim 1
    **characterised in that**
    for the journal bush (100 there applies:

$$0.37 < 3.6/a\,(D - B) + kD\ < 0.49 \qquad\qquad (2)$$

3.  Journal bush (100) according to one of the preceding claims,
    **characterised by**
    an end section (120) which is of hollow-cylindrical form and which by its inner diameter adjoins in aligned manner the conical length section at the location of the smallest cone diameter A thereof.

4.  Journal bush (100) according to any one of the preceding claims,
    **characterised in that**
    the journal bush (100) has at its inner side a groove (122) for partial reception of a key (20).

5.  Roll stand comprising

    at least one bearing housing configured as an oil film bearing with an inner conical journal bush (100) according to any one of the preceding claims; and
    at least one roll (200), the roll journal (210) of which is formed with a conical roll journal section (212) and preferably also a cylindrical roll journal end section (214), for reception in the journal bush (100),
    wherein the journal bush together with the roll journal is rotatably mounted in the bearing housing, preferably in a bearing bush in the bearing housing.

6.  Roll stand according to claim 5,
    **characterised in that**

    the roll journal (210) has a groove at its outer side;
    a key (20) is provided, of which a first part is received by the groove at the inner side of the journal bush (100) and a second part is received by the groove (216) at the outer side of the roll journal (210); and
    at least one of the two grooves is so dimensioned with respect to the dimensions of the key (20) that the key (20) in the load-free state, particularly outside of rolling operation, is seated in the grooves with an axial play of Sa > 0.0 mm and with a radial play Sr > 0.5 mm.

7.  Roll stand according to claim 6,
    **characterised in that**
    the journal bush (100) is with the help of a fastening ring (230) and a spring ring (220) arranged in axial direction between the journal bush (100 and the fastening ring (230) secured on the roll journal against slipping off the roll journal (210) in axial direction; and the spring rate of the spring ring (220) is designed so that in the case of maximum loading of the bearing the then-arising downward slope force computed on the basis of the known cone angle leads to a minimum axial displacement of the journal bush of 1/10 mm, preferably 3/10 mm.


**Revendications**

1.  Douille d'arbre (100) destinée à être utilisée comme élément d'un palier à film d'huile dans un laminoir pour recevoir un tourillon conique d'un rouleau, en particulier d'un rouleau de support ; la douille d'arbre étant

    - élastiquement déformable sous l'effet d'une force de laminage exercée par le laminoir ;
    - de forme cylindrique sur sa face extérieure avec un diamètre extérieur de roulement D ;
    - présentant une section longitudinale intérieure conique (110), qui est conique sur sa face intérieure sur une longueur de cône a, avec un grand diamètre de cône B et un angle de cône β, afin de recevoir le tourillon conique du rouleau ; et
    la section longitudinale conique (110) présentant sur sa face intérieure des rainures de lubrification (112) destinées à introduire un lubrifiant dans l'espace intermédiaire entre la face intérieure de la douille d'arbre et la face extérieure du tourillon conique ;
    **caractérisée en ce que**

la douille d'arbre (100) satisfait à la relation suivante :

$$0,35 < \frac{3,6}{a}(D - B) + kD < 0,5 \qquad (1)$$

avec
k = 0,15/m coefficient de frottement.

2. Douille d'arbre (100) selon la revendication 1,
**caractérisée en ce que**
la douille d'arbre (100) satisfait à la relation suivante :

$$0,37 < 3,6/a(D - B) + kD < 0,49 \qquad (2)$$

3. Douille d'arbre (100) selon l'une des revendications précédentes,
**caractérisée par**
une section terminale (120) de forme creuse et cylindrique, qui est raccordée - avec son diamètre intérieur aligné - avec l'endroit du plus petit diamètre de cône A de la section longitudinale conique.

4. Douille d'arbre (100) selon l'une des revendications précédentes,
**caractérisée en ce que**
la douille d'arbre (100) présente sur sa face intérieure une rainure (122) destinée à recevoir partiellement une clavette (20).

5. Laminoir comprenant

au moins un boîtier de palier conçu comme un palier à film d'huile avec une douille d'arbre intérieurement conique (100) selon l'une des revendications précédentes ; et
au moins un rouleau (200), dont le tourillon (210) est conçu avec une section de tourillon conique (212) et, de préférence, également une section terminale de tourillon cylindrique (214) destinée à être reçue dans la douille d'arbre (100),
la douille d'arbre étant montée de manière rotative avec le tourillon dans le boîtier de palier, de préférence dans une bague de palier située dans le boîtier de palier.

6. Laminoir selon la revendication 5,
**caractérisé en ce que**

le tourillon (210) présente sur sa face extérieure une rainure ;
**en ce qu'**une clavette (20) est prévue, dont une première partie est reçue par la rainure située sur la face intérieure de la douille d'arbre (100) et une seconde partie est reçue par la rainure (216) située sur la face extérieure du tourillon (210) ; et
**en ce qu'**au moins l'une des deux rainures est dimensionnée, par rapport aux dimensions de la clavette (20), de sorte que la clavette (20) présente, à l'état sans charge, en particulier en dehors du fonctionnement du laminoir, un jeu axial de Sa > 0,0 mm et un jeu radial de Sr > 0,5 mm dans les rainures.

7. Laminoir selon la revendication 6,
**caractérisé en ce que**

la douille d'arbre (100) est fixée sur le tourillon contre tout glissement axial du tourillon (210) au moyen d'un anneau de fixation (230) et d'un anneau élastique (220) disposé en direction axiale entre la douille d'arbre (100) et l'anneau de fixation (230) ; et
**en ce que** la raideur de l'anneau élastique (220) est conçue de telle manière qu'en cas de contrainte maximale du palier, la force de descente résultante, calculée avec l'angle de cône connu, entraîne un déplacement axial minimal de la douille d'arbre de 1/10 mm, de préférence de 3/10 mm.

Fig. 1

EP 4 341 014 B1

Fig. 2

Fig. 3

Lagerbuchse

M

FR

100

210

Fig. 4

M

Drehrichtung

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2843658 A1
- DE 2843658
- WO 2011096672 A
- EP 1213061 B1

- DE 102016214011 A1
- DE 102017217562 A1
- DE 3150496 A1